# EUROPÄISCHE PATENTSCHRIFT

(11) **EP 4 010 281 B1**
(45) Veröffentlichungstag und Bekanntmachung des Hinweises auf die Patenterteilung: **17.06.2026**
(21) Anmeldenummer: 20753330.8
(22) Anmeldetag: 05.08.2020
(51) Int. Cl.: B67D 1/12, B67D 1/08, A47G 19/22

(54) **GETRÄNKESPENDERSYSTEM FÜR EIN KRAFTFAHRZEUG**
BEVERAGE DISPENSING SYSTEM FOR A MOTOR VEHICLE
SYSTEME DISTRIBUTEUR DE BOISSONS POUR UN VÉHICULE À MOTEUR

(30) Priorität: 09.08.2019 DE 102019005627
(43) Veröffentlichungstag der Anmeldung: 15.06.2022
(73) Patentinhaber: KOSTAL Automobil Elektrik GmbH & Co. KG, 58513 Lüdenscheid (DE)
(72) Erfinder: DREES, Roland, 59199 Bönen (DE)
(74) Vertreter: Leopold Kostal GmbH & Co. KG
(86) Internationale Anmeldenummer: PCT/EP2020/071970
(87) Internationale Veröffentlichungsnummer: WO 2021/028285

(56) Entgegenhaltungen:
- WO-A1-2016/071880
- CH-A2- 702 947
- US-A1- 2008 223 478
- US-A1- 2016 096 716

## Beschreibung

Die Erfindung betrifft ein Getränkespendersystem für ein Kraftfahrzeug mit einem Getränkespender, der ein aufwärts gerichtetes Düsenrohr zur Ausgabe einer Getränkeflüssigkeit aufweist, und mit einem Trinkgefäß, das mit dem Düsenrohr des Getränkespenders verbindbar ist und das von seiner Bodenseite her mit der Getränkeflüssigkeit befüllbar ist, wobei das Trinkgefäß als ein annähernd zylinderförmiger oder annähernd kegelstumpfförmiger Becher ausgebildet ist, bei dem ein zentraler Abschnitt der Bodenfläche einen beidseitig offenen, rohrartigen hohlen Dom ausbildet, welcher zum Befüllen des Trinkgefäßes auf das Düsenrohr des Getränkespenders gesteckt wird, und wobei der Dom sich von der Unterseite des Trinkgefäßes in das Innere mindestens bis zur halben Höhe des Trinkgefäßes erstreckt.

In Kraftfahrzeuge integrierte Getränkespender zur Ausgabe von Kaffee oder anderen Getränken besitzen üblicherweise einen Auslass, unter dem ein Becher oder eine Tasse als Trinkgefäß platziert werden kann, so dass das Getränk von oben in das Trinkgefäß hineinlaufen kann. Das Trinkgefäß auf einer Stellfläche genau unterhalb des Auslasses zu platzieren erfordert ein gewisses Maß an visueller Aufmerksamkeit. Erfolgt das Platzieren durch den Fahrer des Kraftfahrzeugs während der Fahrt, so ist dieser für einem Moment vom Verkehrsgeschehen abgelenkt, was ein Sicherheitsrisiko darstellt.

Aus der europäischen Patentschrift EP 2 957 504 B1 ist ein Getränkespendersystem bekannt, bei dem ein Trinkgefäß von dessen Unterseite her befüllt werden kann. Das hierbei verwendete Trinkgefäß weist eine magnetische Verschlussanordnung auf, die das Trinkgefäß nach dem Abnehmen vom Getränkespender automatisch verschließt.

Ein solches Trinkgefäß ist mechanisch recht aufwendig. Insbesondere dann, wenn Einwegtrinkgefäße zum Einsatz kommen sollen, stellt eine solche Mechanik einen erheblichen Kostenfaktor dar.

Ein gattungsgemäßes Getränkespendersystem ist aus der Druckschrift US 2008/0223478 A1 bekannt. Darin werden ein Verfahren und eine Vorrichtung zum Befüllen von speziell gestalteten Getränkebehältern von unten durch eine Einwegöffnung offenbart. Bei einer Ausführungsform wird ein Schirmventil verwendet, das in einem perforierten Stopfen montiert ist, der in den Boden eines Getränkebehälters eingepasst ist. Wenn es in Kontakt mit konzentrischen O-Ringdichtungen an einer Flüssigkeitszuführungsbaugruppe gebracht wird, wird der Getränkebehälter durch Vakuumansaugung nach unten zur Flüssigkeitszuführungsbaugruppe hin befestigt, wodurch ein flüssigkeitsdichter Kanal für die Zuführung von Flüssigkeiten entsteht. Die Flüssigkeiten stammen aus einem unter Druck stehenden Reservoir und werden durch eine Flüssigkeitszuführung geleitet, wodurch das Schirmventil geöffnet wird und die Flüssigkeit in das Innenvolumen des Getränkebehälters fließen kann. Nach Beendigung des Füllvorgangs wird der Druck aus dem Vorratsbehälter abgelassen, so dass das Schirmventil wieder geschlossen werden kann. Der Getränkebehälter kann nun von der Flüssigkeitsabgabevorrichtung abgekoppelt und wie gewünscht verwendet werden. In einer weiteren Ausführungsform ist ein perforiertes Rohr aus Elastomer direkt in ein Loch im Boden des Getränkebehälters eingepasst, wodurch eine flüssigkeitsdichte Abdichtung entsteht. Das Rohr bildet an der Unterseite des Getränkebehälters einen Einlasskanal aus und besitzt an seiner Oberseite seitlich eine Auslassöffnung.

Die Druckschrift US 2016/0096716 A1 beschreibt ein Flüssigkeitsabgabesystem mit einem Becherhalter und einem Becher. Der Becherhalter weist eine Grundplatte und mindestens eine Seitenwand auf, die einen Halterhohlraum bildet; sowie mindestens eine Rohrkammer, die sich von der Grundplatte so erstreckt, dass sie in den Halterhohlraum hineinragt. Der Becher umfasst eine Bechergrundplatte, die mindestens ein Plattenloch bildet, das mit der mindestens einen Rohrkammer ausgerichtet ist; und ein Ventil, das an der Grundplatte so angebracht ist, dass es beim Abdichten des mindestens einen Hohlraumlochs in einer abgedichteten Konfiguration vorgespannt ist.

Die Schweizer Patentanmeldung CH 702 947 A2 beschreibt ein Einweg-Kaffeebechersystem mit einer Pulverfüllung in einem doppelten Boden eines Bechers. Der Becherboden hat auf der Unterseite zentrisch ein Rückschlagventil eingelassen, über das der Becher mittels einer Injektionsnadel von unten aufgefüllt werden kann.

Es stellte sich die Aufgabe, ein besonders einfaches gattungsgemäßes Getränkespendersystem zu schaffen, welches die vorgenannten Nachteile vermeidet.

Diese Aufgabe wird erfindungsgemäß dadurch gelöst, dass der zentrale Abschnitt der Bodenfläche in das Innere des Trinkgefäßes gewölbt ist und einstückig den hohlen Dom ausbildet.

Das erfindungsgemäß ausgebildete Getränkespendersystem ermöglicht auch ohne besondere visuelle Aufmerksamkeit ein Zusammenfügen von Getränkespender und Trinkgefäß, in dem sich ein zylinderförmig oder vorzugsweise konisch geformtes Düsenrohr des Getränkespender leicht in den gewölbt geformten hohlen Dom des Trinkgefäß einfügen lässt. Das Trinkgefäß gleitet danach von selbst durch sein Eigengewicht in die korrekte Befüllposition am Getränkespender.

Durch das formschlüssig in den Dom des Trinkgefäßes eingreifende Düsenrohr sitzt das Trinkgefäß sehr stabil am Getränkespender, was besonders hinsichtlich der in einem Kraftfahrzeug auftreten Brems- und Beschleunigungskräfte sehr vorteilhaft ist.

Das Trinkgefäß für das erfindungsgemäße Getränkespendersystem kann aus einem beliebigen Werkstoff, insbesondere aus Metall oder Porzellan bestehen. Das Trinkgefäß ist auch in einer Einwegvariante aus Pappe oder Kunststoff sehr kostengünstig herstellbar.

Die Form des Trinkgefäßes entspricht in etwa der Form einer sehr schmalen, aber relativ hohen Napfkuchenform, wobei allerdings der zentrale Dom nicht bis zur Höhe der Außenwand des Trinkgefäßes reicht.

Das Trinkgefäß kann bis knapp unterhalb des freien offenen Endabschnitts des Domes befüllt werden. Nach dem Abnehmen des Trinkgefäßes vom Düsenrohr läuft auch beim Neigen des Trinkgefäßes keine Flüssigkeit durch die Domöffnung, da der Flüssigkeitsspiegel nicht die Öffnung des Domes erreicht. Die Form des Trinkgefäßes ist somit auch ohne eine aufwändige Ventilmechanik inhärent auslaufsicher.

Nachfolgend soll ein Ausführungsbeispiel der Erfindung anhand der Zeichnung dargestellt und erläutert werden. Es zeigen
- Figur 1: ein Getränkespendersystem,
- Figur 2: ein Trinkgefäß in einer Schnittansicht,
- Figur 3: ein mit einem Getränkespender verbundenes Trinkgefäß in einer Schnittansicht mit einer ersten Düsenrohrstellung,
- Figur 4: ein mit einem Getränkespender verbundenes Trinkgefäß in einer Schnittansicht mit einer zweiten Düsenrohrstellung.

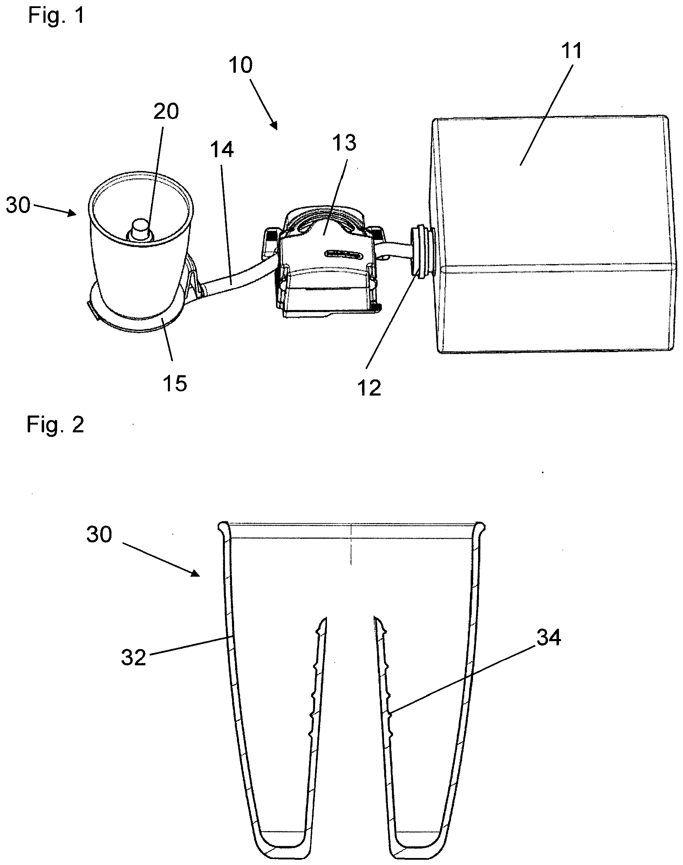

Die Figur 1 zeigt schematisch den Aufbau eines erfindungsgemäß ausgeführten Getränkespendersystems. Dieses besteht aus einem Getränkespender 10 und einem zum Befüllen angefügten Trinkgefäß 30.

Der Getränkespender 10 besteht aus einem Vorratsgefäß 11 für eine Getränkeflüssigkeit 40, welche über einen Schlauchanschluss 12 einem Schlauch 14 zugeführt werden kann. Der Schlauch 14 führt zu einer Düse 20, über die die Getränkeflüssigkeit 40 in das Trinkgefäß 30 ausgegeben werden kann. Das Vorratsgefäß 11 kann Wasser oder eine beliebige andere Getränkeflüssigkeit 40 enthalten. Nach Entleerung kann das Vorratsgefäß 11 entweder neu befüllt oder gegen ein neues ausgetauscht werden.

Zum Befüllen des Trinkgefäßes 30 wird die Getränkeflüssigkeit 40 durch eine elektrische Pumpe 13 vom Vorratsgefäß 11 zur Düse gefördert. Die Pumpe 13 kann sehr vorteilhaft als Peristaltikpumpe ausgeführt, da so die Getränkeflüssigkeit 40 in keinen direkten Kontakt mit der Pumpenmechanik gerät.

Eine Besonderheit des beschriebenen Getränkespendersystems besteht darin, dass das Trinkgefäß 30 von unten, das heißt von seiner Bodenfläche her befüllt wird, und zwar ohne dass hierzu eine besondere Ventil- oder Verschlussmechanik erforderlich ist.

Ein hierzu geeignetes Trinkgefäß 30 ist in der Figur 2 in einer Schnittansicht skizziert. Das Trinkgefäß 30 hat äußerlich die übliche Form einer Tasse oder eines Bechers. Von der Unterseite des Trinkgefäßes 30 erstreckt sich einstückig ein rohrartiger hohler Dom 34 in das Innere des Trinkgefäßes 30. Die Form des Doms 34 ist, wie in der Zeichnung dargestellt, sich zu seinem freien Endabschnitt hin konisch verjüngend ausgebildet sein. Das Trinkgefäß 30 weist somit eine Verbindung von seiner Unterseite zu seinem Innenraum auf.

Die Höhe des Domes 34 relativ zu den Außenwänden 32 darf nicht zu gering sein, um eine ausreichende Befüllung des Trinkgefäßes 30 zu ermöglichen und erstreckt sich mindestens bis zur halben Höhe des Trinkgefäßes 30. Wie nachfolgend dargestellt wird, wird zum Befüllen des Trinkgefäßes 30 ein Düsenkopf in das Trinkgefäß 30 eingebracht, der über den Dom 34, aber nicht über die Außenwände 32 des Trinkgefäßes 30 hinausragt. Daher beträgt die Höhe des Domes 34 vorzugsweise, wie hier dargestellt, etwa drei Viertel der Höhe der Außenwände 32.

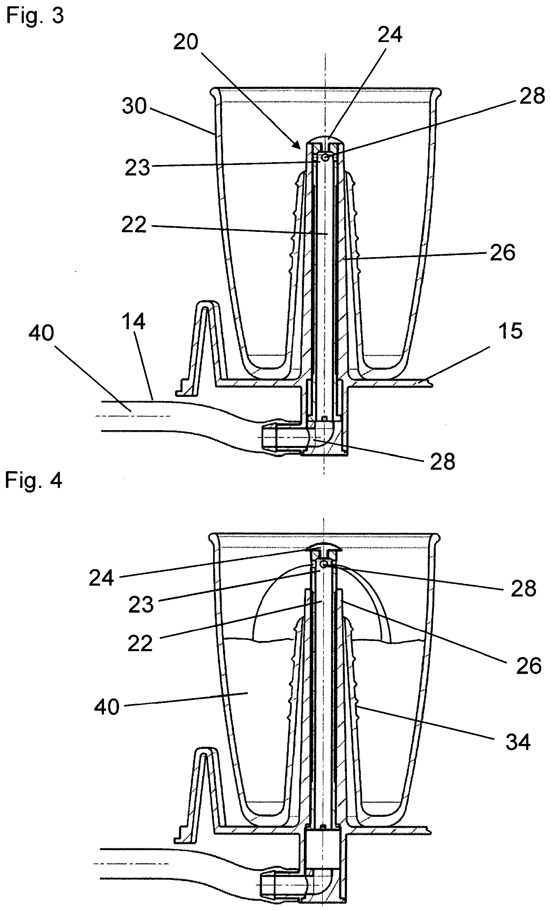

Die Figuren 3 und 4 erläutern das Befüllen des Trinkgefäßes 30 mit einer Getränkeflüssigkeit 40.

Zu Befüllen wird das Trinkgefäß 30 über die Düse 20 gestülpt. Die Düse 20 weist ein Düsenrohr 22 auf, welches an seinem freien Ende einen Düsenkopf 23 mit mehreren Düsenöffnungen 28 ausbildet.

Das Düsenrohr 22 ist verschieblich in einem Standrohr 26 angeordnet, welches mit einer Stellfläche 15 verbunden ist, die der Getränkespender 10 zum Abstützen der Bodenfläche des Trinkgefäßes 30 aufweist. Das Standrohr 26 erstreckt sich in senkrechter Richtung von dieser Stellfläche 15 und ist zudem einstückig an der Stellfläche 15 angeformt.

Die Unterseite des Standrohrs 26 ist mit dem Schlauch 14 verbunden, über den die Getränkeflüssigkeit 40 aus dem Vorratsgefäß 11 in das Standrohr 26 und damit auch in das Düsenrohr 22 gepumpt werden kann.

Bei aufgesetztem Trinkgefäß 30 ist das Standrohr 26 in den Dom 34 des Trinkgefäßes eingesetzt und erstreckt sich bis über den freien Endabschnitt des Doms 34 hinaus. Im oberen Bereich des Doms 34 liegt dessen Innenfläche flüssigkeitsdicht abschließend am Standrohr 26 an, so dass beim Befüllen des Trinkgefäßes 30 ein Auslaufen der Getränkeflüssigkeit 40 durch die Öffnung des Doms 34 ausgeschlossen ist.

Durch den von der Pumpe 13 erzeugten Flüssigkeitsdruck wird das im Standrohr 26 angeordnete Düsenrohr 22 angehoben, wodurch der Düsenkopf 23 aus dem Standrohr 26 hervorsteht und die Getränkeflüssigkeit 40 aus den im Düsenkopf 23 vorhandenen Düsenöffnungen 28 heraustreten und das Trinkgefäß 30 befüllen kann (Figur 4). Das Befüllen des Trinkgefäßes 30 kann knapp bis zur Höhe des Doms 34 erfolgen.

Fällt durch Abschalten der Pumpe 13 der Flüssigkeitsdruck fort, so fällt da Düsenrohr 22 durch sein Eigengewicht im Standrohr 26 nach unten. Hierdurch fährt der Düsenkopf 23 wieder in das Standrohr 26 ein und eine oberhalb des Düsenkopfs 23 angeordnete Düsenkappe 24 verschließt die Öffnung des Standrohrs 26 (Figur 3).

Nach dem Befüllen kann das Trinkgefäß 30 vom der Düse 20 abgezogen werden und seinem Zweck entsprechend verwendet werden. Der Flüssigkeitsspiegel der im Trinkgefäß 30 enthaltenen Getränkeflüssigkeit 40 verbleibt auch bei einem Verkippen des Trinkgefäßes 30 immer unterhalb des Niveaus des gefäßinneren Endabschnitts des Domes 34, so dass das Trinkgefäß 30 trotz seiner speziellen Form wie ein konventioneller Becher oder eine konventionelle Tasse zum Trinken verwendet werden kann.

### Bezugszeichen

- 10: Getränkespender
- 11: Vorratsgefäß
- 12: Schlauchanschluss
- 13: Pumpe
- 14: Schlauch
- 15: Stellfläche
- 20: Düse
- 22: Düsenrohr
- 23: Düsenkopf
- 24: Düsenkappe
- 26: Standrohr
- 28: Düsenöffnungen
- 30: Trinkgefäß
- 32: Außenwände
- 34: Dom
- 40: Getränkeflüssigkeit

## Patentansprüche

1. Getränkespendersystem für ein Kraftfahrzeug
mit einem Getränkespender (10), der ein aufwärts gerichtetes Düsenrohr (22) zur Ausgabe einer Getränkeflüssigkeit (40) aufweist, und
mit einem Trinkgefäß (30), das mit dem Düsenrohr (22) des Getränkespenders (10) verbindbar ist und das von seiner Bodenseite her mit der Getränkeflüssigkeit (40) befüllbar ist,
wobei das Trinkgefäß (30) als ein annähernd zylinderförmiger oder annähernd kegelstumpfförmiger Becher ausgebildet ist, bei dem ein zentraler Abschnitt der Bodenfläche einen beidseitig offenen, rohrartigen hohlen Dom (34) ausbildet, welcher zum Befüllen des Trinkgefäßes (30) auf das Düsenrohr (22) des Getränkespenders (10) gesteckt wird, und
wobei der Dom (34) sich von der Unterseite des Trinkgefäßes (30) in das Innere mindestens bis zur halben Höhe des Trinkgefäßes (30) erstreckt,
**dadurch gekennzeichnet,**
**dass** der zentrale Abschnitt der Bodenfläche in das Innere des Trinkgefäßes (30) gewölbt ist und einstückig den hohlen Dom (34) ausbildet.

2. Getränkespendersystem nach Anspruch 1, **dadurch gekennzeichnet, dass** der Getränkespender (10) ein Standrohr (26) aufweist, das sich senkrecht von einer Stellfläche (15) für das Trinkgefäß (30) erstreckt und dass das Düsenrohr (22) verschiebbar in dem Standrohr (26) angeordnet ist.

3. Getränkespendersystem nach Anspruch 1, **dadurch gekennzeichnet, dass** der Getränkespender (10) zur Befüllen des Trinkgefäßes (30) eine elektrische Pumpe (13) aufweist.

4. Getränkespendersystem nach Anspruch 1, **dadurch gekennzeichnet, dass** die elektrische Pumpe (13) als Peristaltikpumpe ausgebildet ist.

## Claims

1. Beverage dispensing system for a motor vehicle having a beverage dispenser (10) having an upwardly directed nozzle tube (22) for dispensing a beverage liquid (40), and
having a drinking vessel (30), which can be connected to the nozzle tube (22) of the beverage dispenser (10) and which can be filled with the beverage liquid (40) from its base side,
wherein the drinking vessel (30) is designed as an approximately cylindrical or approximately frustoconical cup, in which a central section of the base surface forms a tubular hollow dome (34) open on both sides, which is plugged onto the nozzle tube (22) of the beverage dispenser (10) for filling the drinking vessel (30), and
wherein the dome (34) extends from the underside of the drinking vessel (30) into the interior at least up to half the height of the drinking vessel (30),
**characterised in that**
the central section of the base surface is curved into the interior of the drinking vessel (30) and integrally forms the hollow dome (34).

2. Beverage dispensing system according to claim 1, **characterised in that** the beverage dispenser (10) has a standpipe (26) extending perpendicularly from a standing surface (15) for the drinking vessel (30), and that the nozzle tube (22) is displaceably arranged in the standpipe (26).

3. Beverage dispensing system according to claim 1, **characterised in that** the beverage dispenser (10) has an electric pump (13) for filling the drinking vessel (30).

4. Beverage dispensing system according to claim 1, **characterised in that** the electric pump (13) is designed as a peristaltic pump.

## Revendications

1. Système de distribution de boissons pour un véhicule à automobile avec un distributeur de boissons (10) comportant un tube de buse (22) orienté vers le haut pour la distribution d'un liquide de boisson (40), et
un récipient pour boire (30) qui peut être relié au tube de buse (22) du distributeur de boissons (10) et qui peut être rempli du liquide de boisson (40) à partir de son côté inférieur,
dans lequel le récipient pour boire (30) est conçu sous la forme d'un gobelet approximativement cylindrique ou approximativement tronconique, dans lequel une section centrale de la surface de fond forme un dôme creux tubulaire (34) ouvert des deux côtés, qui est emboîté sur le tube de buse (22) du distributeur de boissons (10) pour le remplissage du récipient pour boire (30), et
dans lequel le dôme (34) s'étend de la face inférieure du récipient pour boire (30) vers l'intérieur au moins jusqu'à la mi-hauteur du récipient pour boire (30),
**caractérisé en ce que**
la section centrale de la surface de fond est bombée vers l'intérieur du récipient pour boire (30) et forme d'une seule pièce le dôme creux (34).

2. Système distributeur de boissons selon la revendication 1, **caractérisé en ce que** le distributeur de boissons (10) comporte un tube vertical (26) qui s'étend verticalement à partir d'une surface d'appui (15) pour le récipient pour boire (30) et **en ce que** le tube de buse (22) est disposé de manière coulissante dans le tube vertical (26).

3. Système distributeur de boissons selon la revendication 1, **caractérisé en ce que** le distributeur de boissons (10) comporte une pompe électrique (13) pour le remplissage du récipient pour boire (30).

4. Système distributeur de boissons selon la revendication 1, **caractérisé en ce que** la pompe électrique (13) est réalisée sous la forme d'une pompe péristaltique.
